# EUROPEAN PATENT SPECIFICATION

(11) **EP 1 180 332 B1**
(45) Date of publication and mention of the grant of the patent: **29.10.2003**
(21) Application number: 00307011.7
(22) Date of filing: 16.08.2000
(51) Int. Cl.: A23L 1/31, A23L 1/27, A23L 1/03, A23L 1/01, A23J 3/22

(54) **Food colouring composition**
Zusammensetzung zur Färbung von Nahrungsmitteln
Composition pour la coloration d'aliments

(43) Date of publication of application: 20.02.2002
(73) Proprietor: Protein Technologies International, Inc., St Louis, Missouri 63188 (US)
(72) Inventor: Hamilton, Marcus N., Idaho Falls, Idaho 83040 (US); Ewing, Colleen E., East St. Louis, Missouri 62205 (US)
(74) Representative: Tubby, David George

(56) References cited:
- US-A- 3 943 263
- US-A- 3 958 019
- US-A- 4 877 626
- US-A- 5 059 444
- US-A- 5 089 278
- US-A- 5 258 194

## Description

The present invention relates to food colouring compositions and protein containing materials containing the same.

Non-meat protein materials, including casein, gluten and vegetable protein materials (such as soy flour, soy concentrates, and soy isolates), as well as protein containing compositions, have become widely used and accepted food ingredients. Such protein materials and protein containing compositions are particularly useful as functional structuring ingredients in meat extenders and meat analogues.

Ideally, the characteristics of a non-meat protein material or a non-meat protein containing composition used as a meat extender or a meat analogue should be similar to meat so that the protein material or protein containing composition closely resembles meat, and preferably cannot be distinguished from meat. Important meat-like characteristics that a meat extender/meat analogue protein material or protein containing composition should have include a meat-like flavour, odour, mouthfeel, and colour.

Protein production processes have been developed and improved to provide meat extender/meat analogue protein products and protein compositions having similar flavour, odour and mouthfeel characteristics as meat. For example, the objectionable odour and flavour of soybean protein materials used in meat extenders or meat analogues are removed by conventional methods of processing of the soybean material. Seasonings and flavourings are commercially available which can be used to provide non-meat protein materials or protein containing compositions with a meat-like flavour and smell. Furthermore, numerous methods exist for texturising protein materials and protein containing compositions to have a mouthfeel texture similar to meats, including processes for forming protein granules such as those disclosed in U.S. Patent No. 5,433,969 and U.S. Patent No. 5,160,758, a process for forming bundles of spun protein fibres as disclosed in U.S. Patent No. 2,682,466, and a process for forming an extruded protein material as disclosed in U.S. Patent No. 3,940,495.

Coloration of non-meat protein materials or non-meat protein containing compositions for use in meat extenders or analogues, however, has proven difficult since meat changes colour as it is cooked. Uncoloured protein materials such as casein, gluten, and soy protein have a beige or a tan colour, which does not resemble the red colour of uncooked meat, and is lighter in colour than the brown colour of cooked meat. Therefore, an uncured meat product blended with and containing uncoloured non-meat protein materials or an uncoloured non-meat protein containing composition will have a mottled appearance in both its uncooked and cooked states. This mottled appearance renders the resulting meat product less appealing and appetising because the meat product does not appear natural to the consumer in either its uncooked state or its cooked state. A meat analogue formed predominantly of an uncoloured non-meat protein material or an uncoloured non-meat protein containing composition also will not have the coloration of an uncured browning meat in either an uncooked or a cooked state, and therefore will suffer a similar lack of appeal due to its unnatural appearance.

Conventional food colouring dyes have been added to protein materials to simulate the colour of meat. Typically, a red coloured food dye is added to the protein material to give the protein material a colour similar to the colour of uncooked meat, providing an aesthetically pleasing meat product when the meat product is uncooked. For example, U.S. Patent No. 4,536,406 provides red meat analogue products formed of soy isolate protein and a red food colouring containing paprika and laccaic acid. A protein material meat analogue or meat extender coloured with a red coloured food dye is acceptable for meats that retain a red coloration upon cooking, such as frankfurters, however the red coloration is a very unsatisfactory colour effect in uncured cooked meats which brown upon cooking since the cooked meat does not appear to be fully cooked.

Combinations of food colouring dyes have been used to provide colour to a protein material so the colour of the protein material resembles the colour of a browning meat in both its uncooked and cooked states. U.S. Patent No. 3,958,019 provides a colour treatment for soy protein materials which colours the protein materials the colour of raw uncured meat, and which changes colour upon cooking to resemble the colour of cooked meat. The colour treatment is a mixture of betanin and canthaxanthin food pigments. According to US-A-3,958,019, neither betanin nor canthaxanthin will separately impart the desired colour characteristics, and the treated raw soy protein must always be mixed with comminuted raw uncured meat.

US-A-5,059,444 discloses a method of treating a raw meat product with a red colour pigment such as betanin, which pigment undergoes decolouration at a temperature higher than the sterilisation temperature of the meat product, so that the treated meat product, when cooked to the sterilisation temperature, will be sterilised and still resemble the red colour of half-roasted meat. The outer portion of the meat product can be heated above the discolouration temperature so that the outer portion will resemble fully roasted meat.

US-A-5,258,194 and US-A-5,089,278 disclose browning compositions for coating a food product to produce surface browning on exposure to heat or microwave energy, so that the browned surface will resemble the colour of the same food product as if it had been cooked by conventional means. According to US-A-5,089,278, the browning composition includes a liposome-encapsulated Maillard browning reagent. According to US-A-5,258,194, the browning composition comprises a dispersed phase containing a colorant, and an oil or fat continuous phase.

Use of food colouring dyes alone in a meat analogue/extender protein material or protein containing composition, however, does not provide the range of colour exhibited by a browning meat as it is cooked from an uncooked state to a cooked state, where the cooked state can range from rare to very well done. Food colouring dyes alone cannot provide a colour to a protein material or a protein containing composition which changes as the protein material or protein containing composition cooks to the same extent and by the same mechanism as the colour of a browning meat changes as it cooks.

We have now discovered a composition for colouring a meat analogue/meat extending protein material or protein containing composition or for colouring a mixture of a browning meat and a meat extender to resemble a browning meat in both an uncooked state and a cooked state.

The present invention thus provides a composition for colouring a non-meat protein containing material. The composition includes a thermally unstable pigment and a browning agent.

The thermally unstable pigment is effective to provide a colour to a protein containing material resembling a colour substantially present in a browning meat only in an uncooked state. The thermally unstable pigment has a structure which undergoes degradation upon exposure to temperatures effective to cook a protein containing material. The degraded thermally unstable pigment is ineffective to provide substantial coloration to a protein containing material. The browning agent is effective to provide a brown colour to a protein containing material upon exposure to temperatures effective to cook a protein containing material. The browning agent enables a protein containing material to which it is added to brown in a manner similar to a browning meat when the protein containing material is cooked.

In a preferred embodiment, the composition also includes a thermally stable pigment. The thermally stable pigment is effective to provide a colour to a protein containing material resembling a colour present in a browning meat in a cooked and an uncooked state.

In another aspect, the present invention is a meat analogue material having similar coloration to a browning meat in both an uncooked and a cooked state. The meat analogue material includes a protein containing material suitable for use as a meat analogue, and a colouring agent mixed with the protein containing material. The colouring agent contains a pigment resembling the colour of an uncooked browning meat, and a browning agent which is effective to brown upon being exposed to temperatures effective to cook the meat analogue material.

In still another aspect, the present invention is a food containing a mixture of a browning meat and a meat extender. The meat extender contains a protein containing material suitable for use as a meat analogue and a colouring agent mixed with the protein containing material. The colouring agent contains a pigment resembling the colour of the meat in an uncooked state, and a browning agent which is effective to brown upon exposure to temperatures effective to cook the food.

In yet another aspect, the present invention is a process for producing a coloured protein containing material having similar coloration to a browning meat in both a cooked and an uncooked state. A pigment resembling the colour of uncooked meat is mixed with a browning agent which is effective to brown upon exposure to cooking temperatures to form a colouring agent. An aqueous solution is formed of the colouring agent, and the aqueous solution is blended with a protein containing material. In a preferred embodiment the pigment contains a thermally unstable pigment resembling a colour substantially present only in an uncooked browning meat and a thermally stable pigment resembling a colour present in a browning meat in an uncooked and a cooked state.

The coloured protein material or protein containing composition in a meat analogue or a meat extender formed with the colouring composition of the present invention browns in the same manner as a browning meat, and therefore, colours similarly to a browning meat upon cooking. Browning meats, when cooked, undergo a Maillard reaction involving the condensation of an amine group and a reducing group to form intermediates which ultimately polymerise to form brown pigments (melanoidins) which give the cooked meat its brown colour. The protein material formed according to the invention includes a browning agent preferably formed of a reducing sugar which is added in sufficient quantity to react with the amine groups of the protein material in a Maillard type reaction so the protein material browns by the same type of reaction, and to the same extent, as the browning meat. Alternatively, the browning agent may also include a source of amine groups which will undergo a Maillard reaction with the reducing sugar, such as a polypeptide material or an amino acid material.

Furthermore, a pigment is also included to give the protein containing material a colour resembling the red colour of an uncooked browning meat so the protein containing material will resemble the meat when uncooked as well as when cooked. Preferably the pigment includes a thermally unstable pigment such as betanin which decomposes upon cooking so the red colour is not present in the cooked protein containing material. The pigment may also include a thermally stable pigment which provides a colour which resembles a colour present in a browning meat in both an uncooked and a cooked state, thus adjusting the colour of the uncooked and cooked protein containing material to resemble browning meat in both states as closely as possible.

The composition of the present invention is designed to simulate the colour of browning meats in both the uncooked and the cooked states, and may be used in a non-meat protein containing material to simulate the coloration of ground beef (hamburger), ground pork, sausage, and other browning meats. The protein containing materials in which the colouring composition is used may be materials formed primarily only of protein, or may be materials formed of protein and other adjuncts which are useful to form meat analogues or meat extenders in conjunction with a protein material. Such adjuncts include, but are not limited to, starches, gums, and fibres. The term "protein containing material", as used herein, refers to both a material which is composed primarily only of protein and to a material which contains protein and other adjuncts.

The colouring composition of the present invention includes at least one pigment for colouring a protein containing material and a browning agent.

### Pigments For Colouring A Protein Containing Material

The colouring composition includes a pigment for colouring a protein containing material a red colour which resembles the colour of a raw, uncooked browning meat, and preferably, pigments which also colour a protein containing material a colour which resembles the colour of a browning meat in both an uncooked and a cooked state. The raw red colouring pigment is a thermally unstable red food colouring agent which will degrade upon exposure to cooking temperatures so that the raw red colour will not be apparent after the protein containing material containing the pigment is cooked. The pigments which provide a colour resembling the colour of a browning meat in both an uncooked state and a cooked state are thermally stable food colouring agents so that a stable meat-like background colour is provided to a protein containing material containing the composition as the protein containing material is cooked.

### Thermally Unstable Pigment

A thermally unstable pigment is used in the colouring composition to provide the red colour of a raw uncooked browning meat in an uncooked protein containing material which is not significantly present in the protein containing material upon cooking the protein containing material. The thermally unstable pigment is a food colouring dye or powder having a red colour which resembles the red coloration of a browning meat in its uncooked state. The thermally unstable pigment is a food colouring dye or powder which has a structure which is degraded upon exposure to temperatures effective to cook a protein containing material to which the pigment is added, where the degraded thermally unstable pigment is ineffective to provide substantial coloration to a protein containing composition. The thermally unstable pigment preferably is degraded at temperatures of 100°C or greater, more preferably at temperatures of 75°C or greater, and most preferably at temperatures of 50°C or greater. In a preferred embodiment, the thermally unstable pigment is effective to impart a colour of uncooked meat to a protein containing material containing the colouring composition inversely proportional to the extent of time the thermally unstable pigment is exposed to a temperature effective to cook the protein containing material so the red colour provided by the thermally unstable pigment fades as the protein containing material is cooked. The raw red colour of the non-degraded thermally unstable pigment, therefore, is present in an uncooked protein containing material to which the colouring composition is added, but is not present in a significant amount in a cooked protein containing material containing the colouring composition since the thermally unstable pigment is degraded.

Preferably, the thermally unstable pigment is betanin, a red food colouring dye or powder having poor thermal stability. Betanin is derived from red beets, typically being prepared from red beet juice or beet powder, and is commercially available in a liquid or powder form from several food colouring manufacturers. Betanin is also available, and useful in the colouring composition of the invention, in beet preparation such as beet powder and beet extract. Commercially available beet preparation, such as beet powder and beet juice extract, commonly include other ingredients which occur naturally or are added as processing aids, carriers, and preservatives, and which do not affect the effectiveness of the betanin in the invention. For example, other ingredients which may be present in a betanin preparation include, but are not limited to, maltodextrin, citric acid, ascorbic acid, and other sugars and solids from red beets. A preferred commercially available betanin containing compound is Beet Juice Extract, No. 3600 beet powder, available from Warner Jenkinson Company, Inc., St. Louis, Missouri, which contains 0.25% to 0.35% betanin.

The thermally unstable pigment or preparation containing the thermally unstable pigment is present in the colouring composition from 0.005% to 30%, by dry weight of the colouring composition. When the thermally unstable pigment is betanin, the betanin preferably forms from 0.005% to 0.5% of the colouring composition, by dry weight, and more preferably forms from 0.01% to 0.05% of the colouring composition, by dry weight. Alternatively, a beet powder or beet extract preparation containing betanin is present in the colouring composition in 5% to 30% of the composition by dry weight, and more preferably in 10% to 20% of the colouring composition by dry weight for optimum colouring of a protein material.

### Thermally Stable Pigment

A thermally stable pigment comprised of one or more thermally stable food colouring dyes may be used in the colouring composition. The thermally stable pigment should be effective to provide a protein containing material with coloration resembling the coloration present in a browning meat in an uncooked state and a cooked state. The thermally stable pigment should be selected from one or more dyes which are not affected by exposure to temperatures effective to cook the protein containing material coloured with the colouring composition. The thermally stable pigment, therefore, gives a protein containing material containing the colouring composition a stable meat background colour as the protein containing material is cooked.

Preferably the thermally stable pigment is formed of a caramel food colouring material and a yellow or orange food colouring agent. The combination of the caramel and yellow or orange food colouring agents, in appropriate amounts, provides colouring to a protein containing material which closely resembles the background colouring of a browning meat in both its uncooked and cooked states.

A variety of caramel food colouring agents which are useful in the present invention are commercially available in a powdered form or in a liquid form from several commercial food colouring manufacturers. Caramel colours differ in their properties and strengths, and a caramel colouring should be selected which provides the best colouring for the specific protein containing material in which the colouring composition is to be used. For example, when the protein containing material to which the colouring composition is to be added is used as a meat extender in conjunction with meat, a caramel colour should be selected which binds to the protein containing material without diffusing into the meat with which the protein containing material is mixed. A commercially available caramel colour which works well in this regard is Caramel Colour No. 602 available from the Williamson Company, Louisville, Kentucky. Another commercially available caramel colour which works well in the composition of the present invention is 5438 Caramel Powder D.S. available from the Warner Jenkinson Company, Inc., St. Louis, Missouri.

Several types of commercially available yellow/orange food colourings may be used in the thermally stable pigment. Most preferably this food colouring is annatto, although turmeric and artificial yellow dyes such as FD&C Yellow #5 can be used, provided they can be successfully bound to the protein containing material. The key ingredient in annatto is the pigment bixin, a yellow-orange caratenoid. A water-soluble form of this pigment when saponified with an alkaline solution is norbixin. A preferred commercially available preparation of annatto for use in the colouring composition of the invention is a dry water-dispersible powder containing 15% norbixin available as ULTRABIX 8100 annatto powder from Warner Jenkinson Company, Inc., St. Louis, Missouri.

The amount of thermally stable pigment present in the present composition is 0% to 7 %, by dry weight, and more preferably from 0.1% to 3%, by dry weight, of the total weight of the colouring composition, on a dry basis. The yellow/orange food colouring material, preferably annatto, constitutes 0% to 2% of the colouring composition, by dry weight, and preferably is present in 0.1% to 1%, by dry weight, of the colouring composition. The caramel food colouring material constitutes 0% to 5%, by dry weight, and preferably 1% to 3%, by dry weight, of the colouring composition.

### Browning Agent

The browning agent of the colouring composition includes at least one reducing sugar and, if necessary, at least one of an amino acid material or a polypeptide material. The browning agent causes a protein containing material in which the colouring composition is mixed to brown similarly to a cooked browning meat upon exposure to temperatures effective to cook the protein containing material since the both browning meat and a protein containing material containing the browning agent brown, at least in part, by the same mechanism: a Maillard reaction between carbonyl (e.g. reducing sugars) and amine groups upon exposure to cooking temperatures. The browning agent, therefore, also causes a protein containing material to brown to a similar extent as a browning meat based upon the length of time the protein containing material containing the browning agent is exposed to cooking temperatures.

The reducing sugar of the browning agent should be capable of undergoing a Maillard browning reaction in the presence of compounds containing amine groups to provide the desired browning when a protein containing material containing the colouring composition is cooked. A wide range of reducing sugars are capable of undergoing a Maillard reaction with an amine group under hot conditions and may be used in the colouring composition, including, but not limited to, xylose, arabinose, galactose, mannose, dextrose, lactose and maltose. The preferred reducing sugar for use in the colouring composition of the present invention is dextrose, which is widely available from a variety of commercial sources.

The reducing sugar of the browning agent is preferably present in the colouring composition from 25% to 95% of the colouring composition by dry weight, and preferably from 35% to 45% of the colouring composition, by dry weight. In one embodiment of the invention, the reducing sugar is present in sufficient quantity in the colouring composition to provide the desired browning effect upon contact with the amino acids of a protein containing material to which the colouring composition is added when the protein containing material is cooked. The reducing sugar should be present in at least 40% of the colouring composition by dry weight to provide sufficient browning with the protein containing material alone.

The browning agent of the colouring composition may also include an amine source - preferably selected from at least one of a polypeptide material, a hydrolysed protein material, or an amino acid material - which will undergo a Maillard reaction with the reducing sugar when the protein containing material containing the colouring composition is cooked. The polypeptide material, hydrolysed protein, or amino acid material provides another source of amine groups capable of undergoing a Maillard reaction with the reducing sugar of the browning agent, thereby ensuring sufficient browning of a protein containing material containing the colouring composition when the protein containing material is cooked. A partially hydrolysed isolated soy protein is a preferred additional source of amine groups in the browning agent, and a preferred partially hydrolysed isolated soy protein is SUPRO 950™, commercially available from Protein Technologies International, Inc., St. Louis, Missouri. Additional amine sources such as amino acids (e.g. lysine) are widely commercially available.

A polypeptide material, hydrolysed protein, and/or amino acid material is preferably included as an amine source in the browning agent to enhance the desired browning. When included in the colouring composition, the amine source preferably is present in the colouring composition in 25% to 55% of the colouring composition by dry weight. Most preferably the amine source is present in the colouring in 35% to 45% by dry weight of the colouring composition.

The colouring composition of the present invention may be prepared by combining the above described components using processes and procedures well known to those of ordinary skill in the art. The components are available in either a liquid form or a powder form, and often in both forms. The components can be mixed directly to form the colouring composition, but preferably the ingredients of the colouring composition are combined in an aqueous solution at a total concentration of 10% to 25% by weight, where the aqueous colouring solution can be conveniently added to a quantity of water for mixing with and colouring a protein containing material.

### A Meat Analogue or Extender Material

A meat analogue or extender material having similar coloration to a browning meat in both an uncooked and a cooked state is prepared by mixing the colouring composition with a protein containing material which is suitable for use as a meat analogue or a meat extender. The amounts of each individual colorant may be varied to adapt the colour of the protein containing material to the desired colour.

The protein material in the protein containing material is preferably a non-meat protein, and may be a vegetable protein material or an animal derived protein material. Animal derived protein materials that may be utilised include, but are not limited to, collagen protein, casein or caseinate proteins, and whey protein albumin. Vegetable protein materials which may be utilised include, but are not limited to, gluten materials and soy protein materials. Most preferably the protein in the protein containing material is a soy protein material such as soy protein isolate, soy protein concentrate, soy flour, soy flakes, or mixtures thereof, where the soy protein material preferably contains at least 50% soy protein. These protein materials are commercially available from various manufacturers, for example, soy protein isolates that may be used in the invention include SUPRO 500E, SUPRO EX 31-33, and SUPRO 515-516, which can be purchased from Protein Technologies International, Inc., Checkerboard Square, St. Louis, Mo. 63164.

The protein containing material may also include adjuncts, including, but not limited to, starches, gums, and fibres, and mixtures thereof. The adjuncts may be included to impart various functionalities to the protein containing material to improve the meat-like characteristics of the protein containing material. For example, starch may be included in the protein containing material to increase the viscosity and gel forming capability of the protein containing material when the protein containing material is hydrated. Gums may be included in the protein containing material to enhance the flowability of the protein containing material. Fibres may be included in the protein containing material to enhance the structure of the protein containing material when hydrated.

The colouring composition may be added to the protein containing material in an aqueous solution, where the colouring composition is diluted in water before being added to the protein containing material. Preferably the colouring composition is diluted in a small quantity of water to form an aqueous solution of the colouring composition as described above, which is then dispersed with the protein containing material in a quantity of water for hydrating the protein containing material. Alternatively, a dry colouring composition and a protein containing material may be dispersed together in water for hydrating the protein containing material.

The protein containing material is hydrated with water containing the dispersed colouring composition, where the water is added to the protein containing material in an amount of 1 part to 6 parts water to 1 part of the protein material, by weight, and most preferably in 2 parts to 3.5 parts water to 1 part of the protein material, by weight. More or less of the combined water/colouring composition solution may be used, however, enough water should be added to facilitate the mixing of the colouring composition with the protein containing material, and excessive amounts of water should be avoided to ensure that the protein containing material absorbs the bulk of the colouring composition. The water/colouring agent solution and the protein material should be thoroughly mixed to hydrate and structure the protein containing material, and so the colouring agent composition is well dispersed in the protein containing material to provide even coloration of the protein containing material.

Preferably the coloured hydrated protein containing material contains from 0.0005% to 0.0028%, by weight, of the thermally unstable pigment, and more preferably contains from 0.00095% to 0.00224% of the thermally unstable pigment. The coloured hydrated protein containing material preferably also contains up to 0.0715%, by weight, of the thermally stable pigment, and more preferably contains from 0.0324% to 0.0514%, by weight, of the thermally stable pigment. The coloured hydrated protein containing material preferably also contains from 0.01% to 3%, by weight, of the reducing sugar, more preferably from 0.5% to 1.5%, by weight, of the reducing sugar. The coloured hydrated protein containing material also preferably contains up to 3%, by weight, of the amine source, either a polypeptide material, a hydrolysed protein material, an amino acid source, or a combination thereof, and more preferably contains from 0.5% to 1.5% of the amine source by weight. In a most preferred embodiment, the coloured hydrated protein containing material contains 0.0005% to 0.0028% betanin, by weight; 0.02% to 0.07% of a caramel colour, by weight; 0.0001% to 0.0015% by weight, of annatto; 0.1% to 3.0% of dextrose, by weight; and 0.1% to 3% of a hydrolysed protein material amine source, by weight.

Simultaneously in conjunction with hydration and treatment with the colour composition, or after being hydrated and treated with the colouring composition, the protein containing material may be texturised by any of a number of known methods for texturising protein materials to provide a meat-like texture to the protein containing material. For example, known processes for texturising protein materials include creating bundles of spun fibres of protein material after hydration of a protein material; extruding a hydrated protein material at a controlled pH, where the fat content of the protein material is minimised; and forming a textured granulated gel of a hydrated protein material.

In a preferred embodiment, the coloured protein material is texturised to form a granulated gel of coloured protein material which is highly suitable for use as a browning meat analogue utilising the method of forming protein granules set forth in U.S. Patent No. 5,433,969. A colouring composition solution is formed by mixing the browning agent compound(s), the thermally unstable pigment, and the thermally stable pigment(s) together with water for hydrating the protein containing material as described above, where the water has a temperature of 0°C to 10°C. The protein containing material and the colouring composition solution are mixed thoroughly together to hydrate the protein containing material and to disperse the colouring composition through the protein containing material.

Coloured protein containing granules useful as a meat analogue or a meat extender are then formed of the hydrated, coloured protein containing material. The coloured hydrated protein containing material is preferably held at -30°C to 10°C for a period of time sufficient to form a gel, and the gel is subdivided to form the coloured protein containing granules.

In another preferred embodiment, the coloured protein material is texturised to form a granulated gel of coloured protein material suitable for use as a browning meat analogue or meat extender in accordance with the method disclosed in U.S. Patent No. 5,160,758. A colouring composition solution is formed by mixing the browning agent compound(s), the thermally unstable pigment, and the thermally stable pigment(s) together with water. The colouring composition solution and a protein containing material are blended under conditions of shear in water having a temperature of from 50°C to 100°C for a time sufficient to form a hydrated protein granule, where the water is present in a ratio of 2 to 3.5 parts of water to 1 part of protein containing material. In this embodiment, the time period and temperatures effective to form the protein granule should be minimised to prevent excessive degradation of the thermally unstable pigment.

The hydrated, coloured protein granules formed by the above methods are suitable for use as a meat analogue or a meat extender without any further treatment. If desired, flavourings can be added to the protein containing material in the course of preparing the granules to provide a meat-like flavour to the granules.

### A Food Containing A Coloured Protein Material Including a Browning Agent

The coloured protein containing material, preferably texturised and flavoured, may be used as a meat analogue or a meat extender. In one aspect of the invention, the coloured protein containing material may be formed into patties or stuffed into casings by itself to form a meat analogue patty or sausage. The meat analogue patties and sausages may be cooked, for example by frying or broiling, at temperatures, and for a time period, effective to cook the meat analogue, for example from 50°C to 260°C.

In another aspect of the invention, the coloured protein material is used to form a food where the coloured protein containing material is used as a meat extender mixed with a browning meat which has been ground or otherwise comminuted. The browning meat may be any meat which browns upon cooking, including exotic meats, but preferably the browning meat is either beef or pork. The mixture may be in any proportion, and usually will contain from 5% to 90% of the coloured protein containing material by weight and from 10% to 95% of the browning meat by weight. Preferably 10% to 50% of the coloured protein containing material is present in the mixture. The food containing the coloured protein containing meat extender and a browning meat may be formed into patties or stuffed into casings, cooked, and then eaten.

The present invention is illustrated in more detail by the following examples using an isolated soy protein material as the base material for a structured ground beef extender. The examples are intended to be illustrative, and should not be interpreted as limiting.

### EXAMPLE 1

A first experiment is conducted to determine the coloration of ground beef patties. Ground beef patties are formulated at three fat levels, 8%, 20%, and 30%, which bracket the range of fat content in beef patties from pure lean beef to the legal limit for fat in the United States. The 8% fat patty is formed of 90% lean trim beef, the 20% fat patty is formed of a combination of 90% lean trim beef (71.4%) and 50% lean trim beef (28.6%), and the 30% fat patty is formed of a combination of 90% lean trim beef (47.6%) and 50% lean trim beef (52.4%). The meats are cooled to 0-4°C and ground through a coarse 2.54 cm (1 inch) plate, mixed briefly in a mixer, and then are reground through a 0.48 cm (3/16 inch) plate and formed into patties. The patties are measured colorimetrically using a Hunter colorimeter and then are cooked to an internal temperature of 68-70°C on a 177°C grill. The cooked patties are again measured colorimetrically using a Hunter colorimeter. The Hunter colorimeter measures colour in L, a, and b values, where the "L" values represent colour shifts in lightness (white = 100, black = 0), the "a" values represent shifts in red (+) and green (-), and the "b" values represents shifts in yellow (+) and blue (-). The results are shown in Table 1 below.

**TABLE 1**

| **Hunter colour** | **8% fat** | **20% fat** | **30% fat** |
|---|---|---|---|
| **Raw** | | | |
| L | 32.88 | 39.68 | 45.18 |
| a | 14.71 | 15.48 | 18.08 |
| b | 9.78 | 11.74 | 13.69 |

| **Cooked** | | | |
|---|---|---|---|
| L | 32.21 | 34.38 | 34.78 |
| a | 6.13 | 5.34 | 4.99 |
| b | 7.56 | 7.17 | 5.36 |

As shown in Table 1, raw meat patties become lighter, redder, and more yellow with increasing fat levels. As the patties are fried, they become darker, less red, and less yellow, with the magnitude of difference becoming greater at increasing fat levels.

### EXAMPLE 2

In a second experiment, meat extenders containing soy protein coloured with colouring compositions formed in accordance with the present invention are formulated, and their colour is measured. Thirty-nine colouring compositions containing Beet powder (#3600, Warner Jenkinson, St. Louis, Missouri), Annatto powder *#8100, Warner Jenkinson, St. Louis, Missouri), caramel colour (#602, Williamson, Louisville, Kentucky), dextrose, and a hydrolysed isolated soy protein (Supro 950, Protein Technologies International, Inc., St. Louis, Missouri) are prepared. The colouring compositions are mixed with water and isolated soy protein (Supro 500E, Protein Technologies International, Inc.) (2.43% colouring composition, 25% isolated soy protein, 72.57% water, by weight) to form a coloured hydrated protein material, which is then granulated.

Each granulated protein material formed with a specific colour combination is uniquely coloured relative to the other granulated protein materials. Each granulated protein material contains between 0-0.8% beet powder, 0-0.01% annatto powder, 0.02-0.05% caramel powder, 0-2.0% dextrose, and 0-2.0% hydrolysed isolated soy protein, by weight of the hydrated protein material, where the specific amount of each ingredient is dependent on the amount of that ingredient in the colouring composition utilised with that protein material.

Each protein material sample is coloured, hydrated, and granulated by chopping the isolated soy protein and the dry colorants with an water/ice mixture until all of the ice crystals disappear and a thick viscous gel is formed. The gel is chopped into granules. The coloration of the granules is measured with a Hunter colorimeter. The granules of each protein material sample are mixed with ground beef into separate patties, and the patties are cooked to an internal temperature of 68-70°C on a 177°C grill. The cooked patties containing the granules of each protein material sample are evaluated for colour by a 5-member panel, which rates the patties on a five point scale (1= "little or no decolouration" to 5= "complete decoloration and browning") (Hunter colorimetry is ineffective to measure the coloration of the granules in the patties since the colorimeter is not capable of discerning the colour of individual granules in the beef patty).

The results of the colour measurements are analysed using a computerised multivariate root-square-mean analysis design to determine the optimum levels of the colour ingredients to best match the coloration of the ground beef. The requirements for cooptimisation are that the colour of the granules in the raw product must fall within the Hunter L, a, and b values of the raw ground beef (determined in Example 1) and simultaneously must score a 4 or a 5 in the colour analysis of the cooked patties. The optimised range of the ingredients in the hydrated protein material, by weight, is as follows: Beet powder (0.25%-0.35% betanin): 0.38%-0.64%; Annatto (15% Norbixin): 0.0026%-0.0094%; Caramel colour: 0.032%-0.052%; dextrose: 0.5%-1.5%; and hydrolysed isolated soy protein: 0.5% to 1.5%. Patties containing protein granules with a colour composition having colour ingredients in the optimised ranges exhibited colouring resembling ground beef in both raw and cooked states.

## Claims

1. A composition for colouring a non-meat protein containing material, comprising:
a thermally unstable pigment effective to provide a colour to said protein containing material resembling a colour substantially present in a browning meat only in an uncooked state, said thermally unstable pigment having a structure which undergoes degradation upon exposure to a temperature effective to cook said protein containing material, where said degraded thermally unstable pigment is ineffective to provide substantial coloration to said protein containing material;
a browning agent effective to impart a brown colour to said protein containing material upon exposure to a temperature effective to cook said protein containing material.

2. A composition according to Claim 1, wherein said thermally unstable pigment has a structure which undergoes degradation upon exposure to a temperature of greater than 50°C and said browning agent is effective to impart a brown colour upon exposure to a temperature of greater than 50°C.

3. A composition according to Claim 1 or Claim 2, wherein said thermally unstable pigment is effective to impart a colour of uncooked meat inversely proportional to the extent of time said thermally unstable pigment is exposed to a temperature effective to cook said protein containing material.

4. A composition according to any one of the preceding Claims, wherein said thermally unstable pigment is betanin.

5. A composition according to Claim 4 wherein said betanin is contained in a beet extract, and said beet extract comprises from 5% to 30% of said composition by dry weight.

6. A composition according to any one of the preceding Claims, wherein said browning agent is an agent effective to impart a brown colour in proportion to the extent of time said browning agent is exposed to a temperature effective cook to said protein containing material.

7. A composition according to any one of the preceding Claims, wherein said browning agent is a reducing sugar.

8. A composition according to Claim 7, wherein said reducing sugar comprises from 25% to 95% of said composition by dry weight.

9. A composition according to Claim 7 or Claim 8, wherein said reducing sugar is dextrose, lactose, maltose, xylose, arabinose, galactose, mannose, or a mixture of any two or more thereof.

10. A composition according to any one of Claims 7 to 9, wherein said browning agent further comprises an amine source which is at least one of a polypeptide material, a hydrolysed protein material, or an amino acid material.

11. A composition according to Claim 10 wherein said amine source comprises from 25% to 55% of said composition by dry weight.

12. A composition according to any one of the preceding Claims, further comprising a thermally stable pigment for providing a colour to said protein material resembling a colour present in a browning meat in a cooked and an uncooked state.

13. A composition according to Claim 12, wherein said thermally stable pigment comprises from 0% to 7% of said composition, by dry weight.

14. A composition according to Claim 12 or Claim 13, wherein said thermally stable pigment is comprised of a caramel food colouring and a yellow/orange food colouring.

15. A composition according to Claim 14, wherein said yellow/orange food colouring is annatto.

16. A composition according to Claim 14 or Claim 15, wherein said caramel food colouring comprises from 0% to 5% of said composition by dry weight and said annatto comprises from 0% to 2% of said composition by dry weight.

17. A composition according to Claim 12, wherein said thermally unstable pigment is betanin, said thermally stable pigment is comprised of a caramel food colouring and annatto, and said browning agent is a reducing sugar.

18. A composition according to Claim 17, wherein said browning agent further comprises an amine source formed of at least one of a polypeptide material, a hydrolysed protein material, or an amino acid material.

19. A meat analogue material having similar coloration to a browning meat in both an uncooked and a cooked state, comprising:
a protein containing material effective as a meat analogue; and
a composition according to any one of the preceding Claims.

20. A meat analogue material according to Claim 19, wherein the protein in said protein containing material is a vegetable protein material, a casein material, a caseinate material, a gluten material, or a mixture of any two or more thereof.

21. A meat analogue material according to Claim 20, wherein said vegetable protein material is a soy protein material selected from soy flour, soy flakes, soy protein concentrate, soy protein isolate, or a mixture of any two or more thereof.

22. A meat analogue material according to any one of Claims 19 to 21, wherein said protein containing material contains an adjunct selected from a fibre, a starch, a gum, or a mixture of any two or more thereof.

23. A food comprising a mixture of a browning meat and a meat extender, said meat extender being formed of a protein containing material suitable for use as a meat analogue and a composition according to any one of Claims 1 to 18.

24. A food according to Claim 23, wherein the protein in said protein containing material of said meat extender is a vegetable protein material, a casein material, a caseinate material, or a gluten material, or a mixture of any two or more thereof.

25. A food according to Claim 24, wherein said vegetable protein material is a soy protein material selected from soy flour, soy flakes, soy protein concentrate, soy protein isolate, or a mixture of any two or more thereof.

26. A food according to any one of Claims 23 to 25, wherein said protein containing material contains an adjunct selected from the group consisting of a fibre, a starch, a gum, or a mixture of any two or more thereof.

27. A process for producing a coloured protein containing material having similar coloration to a browning meat in both a cooked and an uncooked state, comprising: blending an aqueous solution containing a composition according to any one of Claims I to 18 with a protein containing material.

28. A process according to Claim 27, wherein said aqueous solution and said protein containing material are blended together under conditions of high shear.

## Patentansprüche

1. Zusammensetzung zum Färben eines Nicht-Fleisch Protein enthaltenden Materials, umfassend: ein thermisch instabiles Pigment, wirksam zum zur Verfügung stellen einer Farbe dem Protein enthaltenden Material, die einer Farbe ähnelt, im wesentlichen in einem sich braun färbenden Fleisch nur in einem ungekochten Zustand vorhanden, wobei das thermisch instabile Pigment eine Struktur hat, die sich Abbau bei Aussetzung auf eine Temperatur, wirksam, das Protein enthaltende Material zu kochen, unterzieht, wobei das abgebaute thermisch instabile Pigment unwirksam ist, wesentliche Färbung dem Protein enthaltenden Material zu liefern,
ein Braufärbungsmittel, wirksam zum Verleihen einer braunen Farbe dem Protein enthaltenden Material bei Aussetzung auf eine Temperatur, wirksam, das Protein enthaltende Material zu kochen.

2. Zusammensetzung nach Anspruch 1, wobei das thermisch instabile Pigment eine Struktur hat, die sich Abbau bei Aussetzung auf eine Temperatur größer als 50°C unterzieht, und das Braunfärbungsmittel ist wirksam, eine braune Farbe bei Aussetzung auf eine Temperatur größer als 50°C zu verleihen.

3. Zusammensetzung nach Anspruch 1 oder Anspruch 2, wobei das thermisch instabile Pigment wirksam ist, eine Farbe von ungekochtem Fleisch zu verleihen, umgekehrt proportional zu dem Zeitausmaß, dem das thermisch instabile Pigment auf eine Temperatur ausgesetzt ist, wirksam, das Protein enthaltende Material zu kochen.

4. Zusammensetzung nach einem der vorhergehenden Ansprüche, wobei das thermisch instabile Pigment Betanin ist.

5. Zusammensetzung nach Anspruch 4, wobei das Betanin in einem Beetenextrakt enthalten ist, und der Beetenextrakt umfaßt 5% bis 30% der Zusammensetzung, bezogen auf Trockengewicht.

6. Zusammensetzung nach einem der vorhergehenden Ansprüche, wobei das Braunfärbungsmittel ein Mittel ist, wirksam, eine braune Farbe an Anteil zu dem Zeitausmaß zu verleihen, dem das Braunfarbungsmittel auf eine Temperatur ausgesetzt ist, wirksam, das Protein enthaltende Material zu kochen.

7. Zusammensetzung nach einem der vorhergehenden Ansprüche, wobei das Braunfärbungsmittel ein reduzierender Zucker ist.

8. Zusammensetzung nach Anspruch 7, wobei der reduzierende Zucker 25% bis 95% der Zusammensetzung, bezogen auf Trockengewicht, umfaßt.

9. Zusammensetzung nach Anspruch 7 oder Anspruch 8, wobei der reduzierende Zucker Dextrose, Lactose, Maltose, Xylose, Arabinose, Galactose, Mannose oder eine Mischung von zwei oder mehreren davon ist.

10. Zusammensetzung nach einem von Ansprüchen 7 bis 9, wobei das Braunfärbungsmittel ferner eine Aminquelle, die mindestens eines von einem Polypeptidmaterial, einem hydrolysierten Proteinmaterial oder einem Aminosäurenmaterial ist, umfaßt.

11. Zusammensetzung nach Anspruch 10, wobei die Aminquelle von 25% bis 55% der Zusammensetzung, bezogen auf Trockengewicht, umfaßt.

12. Zusammensetzung nach einem der vorhergehenden Ansprüche, ferner umfassend ein thermisch stabiles Pigment zum zur Verfügung stellen einer Farbe dem Proteinmaterial, die einer Farbe, vorhanden in einem sich braun färbenden Fleisch in einem gekochten und einem ungekochten Zustand, ähnelt.

13. Zusammensetzung nach Anspruch 12, wobei das thermisch stabile Pigment 0% bis 7% der Zusammensetzung, bezogen auf Trockengewicht, umfaßt.

14. Zusammensetzung nach Anspruch 12 oder Anspruch 13, wobei das thermisch stabile Pigment aus einem Karamelnahrungsmittelfarbstoff und einem gelb/orange Nahrungsmittelfarbstoff zusammengesetzt ist.

15. Zusammensetzung nach Anspruch 14, wobei der gelb/orange Nahrungsmittelfarbstoff Annatto ist.

16. Zusammensetzung nach Anspruch 14 oder Anspruch 15, wobei der Karamelnahrungsmittelfarbstoff 0% bis 5% der Zusammensetzung, bezogen auf Trockengewicht, umfaßt, und das Annatto umfaßt 0% bis 2% der Zusammensetzung, bezogen auf Trockengewicht.

17. Zusammensetzung nach Anspruch 12, wobei das thermisch instabile Pigment Betanin ist, das thermisch stabile Pigment ist aus einem Karamelnahrungsmittelfarbstoff und Annatto zusammengesetzt, und das Braunfärbungsmittel ist ein reduzierender Zucker.

18. Zusammensetzung nach Anspruch 17, wobei das Braunfärbungsmittel ferner eine Aminquelle, gebildet aus mindestens einem von einem Polypeptidmaterial, einem hydrolysierten Proteinmaterial oder einem Aminosäurenmaterial, umfaßt.

19. Fleischanalogmaterial mit ähnlicher Färbung wie einem sich braun färbenden Fleisch in sowohl einem ungekochten wie einem gekochten Zustand, umfassend:
ein Protein enthaltendes Material, wirksam als ein Fleischanalog, und eine Zusammensetzung nach einem der vorhergehenden Ansprüche.

20. Fleischanalogmaterial nach Anspruch 19, wobei das Protein in dem Protein enthaltenden Material ein Pflanzenproteinmaterial, ein Caseinmaterial, ein Caseinatmaterial, ein Glutenmaterial oder eine Mischung von zwei oder mehreren davon ist.

21. Fleischanalogmaterial nach Anspruch 20, wobei das Pflanzenproteinmaterial ein Sojabohnenproteinmaterial, ausgewählt aus Sojabohnenmehl, Sojabohnenflocken, Sojabohnenproteinkonzentrat, Sojabohnenproteinisolat oder einer Mischung von zwei oder mehreren davon, ist.

22. Fleischanalogmaterial nach einem von Ansprüchen 19 bis 21, wobei das Protein enthaltende Material einen Zusatz, ausgewählt aus einer Faser, einer Stärke, einem Gummi oder einer Mischung von zwei oder mehreren, davon enthält.

23. Nahrungsmittel, umfassend eine Mischung eines sich braun färbenden Fleisches und eines Fleischfüllmittels, wobei das Fleischfüllmittel aus einem Protein enthaltenden Material, geeignet für Verwendung als ein Fleischanalog, gebildet ist, und eine Zusammensetzung nach einem von Ansprüchen 1 bis 18.

24. Nahrungsmittel nach Anspruch 23, wobei das Protein in dem Protein enthaltenden Material des Fleischfüllmittels ein Pflanzenproteinmaterial, ein Caseinmaterial, ein Caseinatmaterial oder eine Glutenmaterial oder eine Mischung von zwei oder mehreren davon ist.

25. Nahrungsmittel nach Anspruch 24, wobei das Pflanzenproteinmaterial ein Sojabohnenproteinmaterial, ausgewählt aus Sojabohnenmehl, Sojabohnenflocken, Sojabohnenproteinkonzentrat, Sojabohnenproteinisolat oder einer Mischung von zwei oder mehreren davon, ist.

26. Nahrungsmittel nach einem von Ansprüchen 23 bis 25, wobei das Protein enthaltende Material einen Zusatz, ausgewählt aus der Gruppe, bestehend aus einer Faser, einer Stärke, einem Gummi oder einer Mischung von zwei oder mehreren davon, enthält.

27. Verfahren zum Herstellen eines gefärbten Protein enthaltenden Materials mit ähnlicher Färbung zu einem sich braun färbenden Fleisch in sowohl einem gekochten wie einem ungekochten Zustand, umfassend Mischen einer wäßrigen Lösung, enthaltend eine Zusammensetzung nach einem von Ansprüchen 1 bis 18, mit einem Protein enthaltendem Material.

28. Verfahren nach Anspruch 27, wobei die wäßrige Lösung und das Protein enthaltende Material unter Bedingungen von Hochscherung zusammengemischt werden.

## Revendications

1. Composition pour colorer une matière contenant une protéine non carnée, comprenant:
un pigment thermiquement instable efficace pour conférer une couleur à ladite matière contenant une protéine ressemblant à une couleur substantiellement présente dans une viande brunissant seulement à l'état non cuit, ledit pigment thermiquement instable ayant une structure qui subit une dégradation par exposition à une température efficace pour cuire ladite matière contenant une protéine, ledit pigment thermiquement instable dégradé étant inefficace pour fournir une coloration substantielle à ladite matière contenant une protéine;
un agent brunissant efficace pour conférer une couleur marron à ladite matière contenant une protéine par exposition à une température efficace pour cuire ladite matière contenant une protéine.

2. Composition selon la revendication 1, dans laquelle ledit pigment thermiquement instable a une structure qui subit une dégradation par exposition à une température supérieure à 50°C et ledit agent brunissant est efficace pour conférer une couleur marron par exposition à une température supérieure à 50°C.

3. Composition selon la revendication 1 ou la revendication 2, dans laquelle ledit pigment thermiquement instable est efficace pour conférer une couleur de viande non cuite inversement proportionnelle à la durée pendant laquelle ledit pigment thermiquement instable est exposé à une température efficace pour cuire ladite matière contenant une protéine.

4. Composition selon l'une quelconque des revendications précédentes, dans laquelle ledit pigment thermiquement instable est la bétanine.

5. Composition selon la revendication 4, dans laquelle ladite bétanine est contenue dans un extrait de betterave, et ledit extrait de betterave représente de 5% à 30% de ladite composition en poids sec.

6. Composition selon l'une quelconque des revendications précédentes, dans laquelle ledit agent brunissant est un agent efficace pour conférer une couleur marron en proportion avec la durée pendant laquelle ledit agent brunissant est exposé à une température efficace pour cuire ladite matière contenant une protéine.

7. Composition selon l'une quelconque des revendications précédentes, dans laquelle ledit agent brunissant est un sucre réducteur.

8. Composition selon la revendication 7, dans laquelle ledit sucre réducteur représente de 25% à 95% de ladite composition en poids sec.

9. Composition selon la revendication 7 ou la revendication 8, dans laquelle ledit sucre réducteur est le dextrose, le lactose, le maltose, le xylose, l'arabinose, le galactose, le mannose ou un mélange de deux ou plusieurs de ceux-ci.

10. Composition selon l'une quelconque des revendications 7 à 9, dans laquelle ledit agent brunissant comprend en outre une source d'amine qui est au moins une substance parmi une matière polypeptidique, une matière protéique hydrolysée ou une matière d'acide aminé.

11. Composition selon la revendication 10, dans laquelle ladite source aminée représente de 25% à 55% de ladite composition en poids sec.

12. Composition selon l'une quelconque des revendications précédentes, comprenant en outre un pigment thermiquement stable pour conférer une couleur à ladite matière protéique ressemblant à une couleur présente dans une viande brunissant à l'état cuit et non cuit.

13. Composition selon la revendication 12, dans laquelle ledit pigment thermiquement stable représente de 0% à 7% de ladite composition, en poids sec.

14. Composition selon la revendication 12 ou la revendication 13, dans laquelle ledit pigment thermiquement stable est composé d'un colorant alimentaire caramel et d'un colorant alimentaire jaune/orange.

15. Composition selon la revendication 14, dans laquelle ledit colorant alimentaire jaune/orange est le rocou.

16. Composition selon la revendication 14 ou la revendication 15, dans laquelle ledit colorant alimentaire caramel représente 0% à 5% de ladite composition en poids sec et ledit rocou représente de 0% à 2% de ladite composition en poids sec.

17. Composition selon la revendication 12, dans laquelle ledit pigment thermiquement instable est la bétanine, ledit pigment thermiquement stable est composé d'un colorant alimentaire caramel et de rocou, et ledit agent brunissant est un sucre réducteur.

18. Composition selon la revendication 17, dans laquelle ledit agent brunissant comprend en outre une source d'amine formée d'au moins une substance parmi une matière polypeptidique, une matière protéique hydrolysée ou une matière d'acide aminé.

19. Matière analogue de viande ayant une coloration semblable à une viande brunissant à l'état tant non cuit que cuit, comprenant:
une matière contenant une protéine efficace en tant qu'analogue de viande; et
une composition selon l'une quelconque des revendications précédentes.

20. Matière analogue de viande selon la revendication 19, dans laquelle la protéine dans ladite matière contenant une protéine est une matière protéique végétale, une matière de caséine, une matière de caséinate, une matière de gluten ou un mélange de deux ou plusieurs de celles-ci.

21. Matière analogue de viande selon la revendication 20, dans laquelle ladite matière protéique végétale est une matière protéique de soja choisie parmi la farine de soja, les paillettes de soja, un concentré de protéine de soja, un isolat de protéine de soja ou un mélange de deux ou plusieurs de ceux-ci.

22. Matière analogue de viande selon l'une quelconque des revendications 19 à 21, dans laquelle ladite matière contenant une protéine contient un adjuvant choisi parmi une fibre, un amidon, une gomme ou un mélange de deux ou plusieurs de ceux-ci.

23. Aliment comprenant un mélange d'une viande brunissant et d'un allongeur de viande, ledit allongeur de viande étant formé d'une matière contenant une protéine appropriée pour l'utilisation en tant qu'analogue de viande et d'une composition selon l'une quelconque des revendications 1 à 18.

24. Aliment selon la revendication 23, dans lequel la protéine dans ladite matière contenant une protéine dudit allongeur de viande est une matière protéique végétale, une matière de caséine, une matière de caséinate ou une matière de gluten, ou un mélange de deux ou plusieurs de celles-ci.

25. Aliment selon la revendication 24, dans lequel ladite matière protéique végétale est une matière protéique de soja choisie parmi la farine de soja, les paillettes de soja, un concentré de protéine de soja, un isolat de protéine de soja ou un mélange de deux ou plusieurs de ceux-ci.

26. Aliment selon l'une quelconque des revendications 23 à 25, dans lequel ladite matière contenant une protéine contient un adjuvant choisi dans le groupe constitué par une fibre, un amidon, une gomme ou un mélange de deux ou plusieurs de ceux-ci.

27. Procédé pour fabriquer une matière contenant une protéine colorée ayant une coloration semblable à une viande brunissant à l'état tant cuit que non cuit, comprenant: le mélange d'une solution aqueuse contenant une composition selon l'une quelconque des revendications 1 à 18 avec une matière contenant une protéine.

28. Procédé selon la revendication 27, dans lequel ladite solution aqueuse et ladite matière contenant une protéine sont mélangées ensemble dans des conditions de haut cisaillement.
